# EUROPÄISCHE PATENTANMELDUNG

(11) **EP 4 148 935 A2**
(43) Veröffentlichungstag der Anmeldung: **15.03.2023**
(21) Anmeldenummer: 22185544.8
(22) Anmeldetag: 18.07.2022
(51) Int. Cl.: H02J 3/00, H02J 3/14, H02J 13/00

(54) **TECHNIK ZUM SCHUTZ ELEKTRISCHER NETZE BEI AUSFALL EINER KOMMUNIKATIONSVERBINDUNG**

(30) Priorität: 14.09.2021 DE 102021123679
(71) Anmelder: E.On Group Innovation GmbH, 45131 Essen (DE)
(72) Erfinder: Hernandez, Luis, 40237 Düsseldorf (DE); Berazaluce, Inigo, 45470 Mühlheim an der Ruhr (DE); Rumney, Denver, Galashiels, TD1 2BL (GB); Jörgen, Rosvall, 23535 Vellinge (SE); Davies, Robert, Putney London, SW15 1AH (GB)
(74) Vertreter: Gunzelmann, Rainer

(57) **Zusammenfassung**

Es wird ein Verfahren zum Steuern einer Leistungsabgabe eines Hauses (20, 21) in ein elektrisches Versorgungsnetz (30) beschrieben, wobei eine Haussteuerung (25) in dem Haus (20, 21) über ein Hausnetz (24) mit einem Energieerzeuger (10) in dem Haus (20, 21) und über das elektrische Versorgungsnetz (30) mit einer Steuerungsvorrichtung (45) in einer Zentraleinheit (40) verbunden ist. Das Verfahren umfasst die Folgenden durch die Haussteuerung (25) ausgeführten Verfahrensschritte: Empfangen, über eine Kommunikationsverbindung (51, 52) zwischen der Steuerungsvorrichtung (45) und der Haussteuerung (25), eines Steuerungsbefehls der Steuerungsvorrichtung (45) und Steuern des Energieerzeugers (10) in Abhängigkeit von dem Steuerungsbefehl, wobei
das Haus (20, 21), bei Ausfall der Kommunikationsverbindung (51, 52) zwischen der Steuerungsvorrichtung (45) und der Haussteuerung (25), nur bis zu einem vorgegebenen Schwellenwert in dem Haus (20, 21) erzeugte elektrische Leistung in das elektrische Versorgungsnetz (30) einspeist.

## Beschreibung

### TECHNISCHES GEBIET

Die vorliegende Offenbarung betrifft eine Technik zum Schutz elektrischer Netze bei Ausfall einer Kommunikationsverbindung, insbesondere bei Ausfall einer Kommunikationsverbindung zwischen zwei Steuerungen und/oder einer Kommunikationsverbindung zwischen einer Steuerung und einem Energieerzeuger. Die vorliegende Offenbarung betrifft ferner ein Verfahren zum Steuern einer Leistungsabgabe eines Hauses in ein elektrisches Versorgungsnetz, ein Verfahren zum Steuern einer Leistungsabgabe eines Energieerzeugers in ein elektrisches Hausnetz eines Hauses, ein Verfahren zum Steuern einer Leistungsabgabe einer Vielzahl von Häusern in ein elektrisches Versorgungsnetz, eine Haussteuerung für ein Haus, einen elektrischen Energieerzeuger in einem Haus, eine Steuerungsvorrichtung in einer Zentraleinheit eines elektrischen Versorgungsnetzes, ein Hausnetz in einem Haus und ein elektrisches Versorgungsnetz, bei denen bei Ausfall einer Kommunikationsverbindung zwischen zwei Steuerungen bzw. einer Steuerung und einem Energieerzeuger eine Überlastung des elektrischen Versorgungsnetz bzw. des Hausnetzes verhindert wird.

### HINTERGRUND

Elektrische Versorgungsnetze verfügen über begrenzte freie Kapazitäten. Ein weiterer Kapazitätsbedarf in den elektrischen Versorgungsnetzen wird durch den Ausbau regenerativer Energiequellen (beispielsweise von Photovoltaikanlagen, Windkraftanlagen, etc.), der Elektrifizierung der Wärmeerzeugung (beispielsweise mit Hilfe von Wärmepumpen) und den Ausbau der E-Mobilität hervorgerufen. Um teure und mehrere Jahre in Anspruch nehmende Netzausbauten zu vermeiden, setzen Energienetzbetreiber immer häufiger intelligente Netzmanagementsysteme ein, welche an das elektrische Versorgungsnetz angeschlossene Lasten, Energieerzeuger und/oder Energiespeicher hinsichtlich der Energieaufnahme aus und der Energieabgabe in das elektrische Versorgungsnetz steuern.

In elektrischen Versorgungsnetzen muss sichergestellt werden, dass es zu keiner Überlastung kommt und die Netzstabilität gewährleistet wird. Um insbesondere Beschädigungen von Transformatoren durch thermische Überlastung zu vermeiden, führen die intelligente Netzmanagementsysteme Maßnahmen zum Vermeiden von Überlasten aus. Dazu umfassen die intelligenten Netzmanagementsysteme eine zentrale Steuerungsvorrichtung, die an das elektrische Versorgungsnetz angeschlossene Lasten, Energieerzeuger und Energiespeicher direkt oder über eine lokale Steuerungsvorrichtung steuern. Probleme für die Netzstabilität und den Überlastschutz des elektrischen Versorgungsnetzes können sich jedoch ergeben, wenn durch einen Ausfall einer Kommunikationsverbindung zwischen zentraler Steuerungsvorrichtung und lokaler Steuerungsvorrichtung bzw. den Lasten, Energieerzeugern und Energiespeichern eine Steuerung der Lasten, Energieerzeuger und Energiespeichern nicht mehr möglich ist, beispielsweise wenn an einem kalten Wintertag eine Vielzahl von an das elektrische Versorgungsnetz angeschlossene Wärmepumpen und Ladestationen für Elektrofahrzeug gleichzeitig große Leistungsmengen aus dem elektrischen Versorgungsnetz beziehen, die zentrale Steuerungsvorrichtung jedoch bedingt durch den Ausfall einer Kommunikationsverbindung die Ladestationen für Elektrofahrzeug nicht vom elektrischen Versorgungsnetz nehmen kann.

Die EP 3736937 A1 betrifft eine Verfahren zum Steuern einer Leistungsabgabe einer Photovoltaikanlage in ein elektrisches Netz. Die Photovoltaikanlage umfasst eine Vielzahl von Photovoltaikeinheiten, die von einer Steuerung gesteuert werden. Die Steuerung ist mit den Photovoltaikeinheiten und einem Leistungsmeter zum Messen der von der Photovoltaikanlage in das elektrische Netz eingespeisten Leistung verbunden. Bei Ausfall der Kommunikationsverbindung zwischen Steuerung und einer der Photovoltaikeinheiten öffnet die Steuerung einen externen Schalter wodurch die defekte Photovoltaikeinheit abgeschaltet wird.

EP 2469681 A2 betrifft ein photovoltaisches, PV, Stromerzeugungssystem mit einer Vielzahl von PV-Kollektoreinheiten, wobei die Vielzahl von PV-Kollektoreinheiten zur Kopplung mit einer mehrphasigen Wechselstromlast konfiguriert ist, einem netzseitigen Wechselrichter und einer Systemsteuerung, die kommunikativ mit jeder der Vielzahl von PV-Kollektoreinheiten gekoppelt und so konfiguriert ist, dass sie den Betrieb der Vielzahl von PV-Kollektoreinheiten steuert. Dabei koordiniert die Systemsteuerung den Betrieb der Vielzahl von PV-Kollektoreinheiten und des netzseitigen Wechselrichters, steuert den Betrieb der mehreren PV-Kollektoreinheiten, um eine an jede Phase der mehrphasigen Wechselstromlast angelegte Real- und Blindleistung separat zu steuern, und steuert den Betrieb der mehreren PV-Kollektoreinheiten basierend auf einem Niederspannungs-Durchlaufereignis und einem Nullspannungs-Durchlaufereignis.

Die WO 2014/165938 A1 betrifft ein Wechselrichter-Energiesystem mit einer Reihe von Solarsträngen, wobei jeder Solarstrang ein oder mehrere Solarmodule als erneuerbare Energiequelle und einen Wechselrichter umfasst. Das Wechselrichter-Energiesystem ist an ein Stromnetz und an eine Last angeschlossen. Eine Stromzufuhr aus dem Wechselrichter-Energiesystem wird so gesteuert, dass der Stromfluss in das oder aus dem Stromnetz innerhalb eines festgelegten Grenzwerts liegt.

### KURZER ABRISS

Der vorliegenden Offenbarung liegt die Aufgabe zugrunde, eine Technik zum Schutz eines elektrischen Netzes bei Ausfall einer Kommunikationsverbindung zum Steuern eines lokalen Energieerzeugers bereitzustellen.

Zur Lösung dieser Aufgabe wird ein Verfahren zum Steuern einer Leistungsabgabe eines Hauses in ein elektrisches Versorgungsnetz vorgeschlagen, wobei eine Haussteuerung in dem Haus über ein Hausnetz mit einem Energieerzeuger in dem Haus und über das elektrische Versorgungsnetz mit einer Steuerungsvorrichtung in einer Zentraleinheit verbunden ist, und das Verfahren die Folgenden, durch die Haussteuerung ausgeführten Verfahrensschritte, umfasst: Empfangen, über eine Kommunikationsverbindung zwischen der Steuerungsvorrichtung und der Haussteuerung, eines Steuerungsbefehls der Steuerungsvorrichtung, und Steuern des Energieerzeugers in Abhängigkeit von dem Steuerungsbefehl, wobei das Haus, bei Ausfall der Kommunikationsverbindung zwischen der Steuerungsvorrichtung und der Haussteuerung, nur bis zu einem vorgegebenen Schwellenwert in dem Haus erzeugte elektrische Leistung in das elektrische Versorgungsnetz einspeist.

Bei dem elektrischen Versorgungsnetz kann es sich um ein Niederspannungsnetz handeln, insbesondere ein Niederspannungsnetz, welches von einem Mittelspannungsnetz gespeist wird. Das elektrische Versorgungsnetz kann als ein intelligentes Stromnetz, ein sogenanntes "Smart Grid", ausgebildet sein.

Bei dem Haus kann es sich um jede Art von Gebäude, wie beispielsweise ein Ein- oder Mehrfamilienhaus handeln, dessen elektrisches Hausnetz mit dem elektrischen Versorgungsnetz verbunden ist. Bei dem Energieerzeuger kann es sich beispielsweise um eine Photovoltaikanlage handeln, die an das elektrische Hausnetz angeschlossen und dazu eingerichtet ist, elektrische Leistung in das elektrische Versorgungsnetz einzuspeisen. Die Photovoltaikanlage umfasst einen Wechselrichter, der eine von einer Vielzahl von Solarmodulen erzeugte Gleichspannung in Wechselspannung wandelt und in das Netz einspeist.

An das Hausnetz können weitere elektrische Komponenten, wie Wärmepumpen, Ladestationen für Elektrofahrzeuge und/oder Energiespeicher, d.h. Komponenten, die Energie in das elektrische Versorgungsnetz einspeisen und aus diesem beziehen, angeschlossen sein. Die Haussteuerung ist dazu eingerichtet, den Energieerzeuger zu steuern, d.h., zu steuern, ob der Energieerzeuger erzeugte elektrische Leistung in das Hausnetz und/oder das elektrische Versorgungsnetz einspeist. Bei der Haussteuerung kann es sich um eine G100-kompatible Steuerung für ein Haus, insbesondere eine sogenannte "Smart Home Steuerung", handeln.

Bei der Zentraleinheit kann es sich um eine Transformatorstation oder eine Transformatorunterstation handeln, in der elektrische Energie von Verteilernetzen im Mittelspannungsbereich (z.B. 3 bis 30 kV in Deutschland) auf die in Haushalten übliche Niederspannung (z.B. 230 V bzw. 400 V in Deutschland) transformiert wird. Die Transformatorstation kann eine Primärtechnik mit einem Leistungstransformator, einer Mittelspannungsschaltanlage und einer Niederspannungsverteilung, eine Sekundärtechnik mit Automatisierungs- und Fernwirktechnik, Energiezähler und eine Kommunikationsvorrichtung umfassen. Die Steuerungsvorrichtung ist über eine Kommunikationsverbindung mit der Haussteuerung verbunden. Über die Kommunikationsverbindung sendet die Steuerungsvorrichtung Steuerungsbefehle zum Steuern des Energieerzeugers an die Haussteuerung. Beispielsweise sendet die Steuerungsvorrichtung der Haussteuerung einen Steuerungsbefehl, worauf die Haussteuerung den Energieerzeuger instruiert, nur bis zu einem vorgegebenen Schwellenwert elektrische Leistung in das elektrische Versorgungsnetz einzuspeisen, oder die Haussteuerung den Energieerzeuger vom Hausnetz abkoppelt. Bei der Steuerungsvorrichtung kann es sich insbesondere um eine G100-kompatible Steuerung handeln.

Bei der Kommunikationsverbindung zwischen der Steuerungsvorrichtung und der Haussteuerung kann es sich um eine Powerline Communication-, PLC, Kommunikationsverbindung handeln. Vorzugsweise handelt es sich um eine Narrowband- (NB) PLC-Kommunikationsverbindung. So kann die Kommunikation zwischen der Steuerungsvorrichtung und der Haussteuerung über einen Verteilungsstrang des elektrischen Versorgungsnetzes erfolgen. Dazu können in der Zentraleinheit und dem Haus PLC-Modems und Koppelkapazitäten vorgesehen sein. Bei der Kommunikationsverbindung zwischen der Steuerungsvorrichtung und der Haussteuerung kann es sich auch um eine drahtlose Kommunikationsverbindung, wie beispielsweise eine Mobilfunk- oder WLAN-Verbindung, oder eine separate drahtgebundene Kommunikationsverbindung, wie beispielsweise eine Ethernet-Verbindung, handeln. Ein Ausfall der Kommunikationsverbindung zwischen der Steuerungsvorrichtung und der Haussteuerung bedeutet, dass ein Empfangen eines von der Steuerungsvorrichtung gesendeten Steuerungsbefehls durch die Haussteuerung oder ein Senden eines Steuerungsbefehls durch die Steuerungsvorrichtung nicht möglich ist.

Bei dem vorgegebenen Schwellenwert kann es sich um einen von dem Netzbetreiber des elektrischen Versorgungsnetzes festgelegten Wert handeln. Insbesondere kann es sich um einen Wert handeln, bei dem eine Einspeisung der in dem Haus erzeugten elektrischen Leistung in das elektrische Versorgungsnetz keine Überlastung des elektrischen Versorgungsnetzes hervorrufen kann. Des Weiteren kann der Schwellenwert derart vorgegeben sein, dass bei Ausfall der Kommunikationsverbindung zwischen der Steuerungsvorrichtung und der Haussteuerung keine bzw. keine Wesentliche in dem Haus erzeugte elektrische Leistung in das elektrische Versorgungsnetz einspeist wird.

Da bei Ausfall der Kommunikationsverbindung zwischen der Steuerungsvorrichtung und der Haussteuerung nur bis zu einem vorgegebenen Schwellenwert in dem Haus erzeugte elektrische Leistung in das elektrische Versorgungsnetz einspeist wird kann sichergestellt werden, dass bei Ausfall der Kommunikationsverbindung keine Überlastsituation in dem elektrischen Versorgungsnetz auftritt. Ferner kann sichergestellt werden, dass sich die Spannung in dem elektrischen Versorgungsnetz nicht auf einen unzulässigen Wert erhöht. Ist die Kommunikationsverbindung zwischen der Steuerungsvorrichtung und der Haussteuerung nach dem Ausfall wiederaufgebaut, so kann die in dem Haus erzeugte elektrische Leistung wieder in das elektrische Versorgungsnetz einspeist werden.

Das Verfahren kann ferner die Schritte Prüfen, ob die Kommunikationsverbindung zwischen der Steuerungsvorrichtung und der Haussteuerung existiert und Begrenzen, bei Feststellen eines Ausfalls der Kommunikationsverbindung zwischen der Steuerungsvorrichtung und der Haussteuerung, der Einspeisung von in dem Haus erzeugter elektrischer Leistung in das elektrische Versorgungsnetz umfassen. Das Prüfen kann regelmäßig, beispielsweise im Abstand von Millisekunden, erfolgen. Die Zeitabstände zwischen den Prüfungen müssen nicht konstant sein. Das Prüfen kann auch in periodischen Abständen erfolgen. Die Begrenzung der Einspeisung kann auf den vorgegebenen Schwellenwert erfolgen. Beispielsweise kann die Haussteuerung in Echtzeit prüfen, ob ein Empfang von an die Steuerungsvorrichtung gesendeten Testdatenpaketen von der Steuerungsvorrichtung bestätigt wird und bei Nichtbestätigung eine elektrische Verbindung des Energieerzeugers mit dem elektrischen Versorgungsnetz öffnen oder die Einspeisung von in dem Haus erzeugter elektrischer Leistung in das elektrische Versorgungsnetz auf den Schwellenwert begrenzen.

Um die von dem Energieerzeuger erzeugte elektrische Leistung auch bei Ausfall der Kommunikationsverbindung zwischen der Steuerungsvorrichtung und der Haussteuerung zu nutzen kann das Verfahren ferner den Schritt Zuführen, bei Feststellen eines Ausfalls der Kommunikationsverbindung zwischen der Steuerungsvorrichtung und der Haussteuerung, der von dem Energieerzeuger erzeugten elektrischen Leistung einem an das Hausnetz angeschlossenen Energiespeicher oder Verbraucher umfassen.

Um weitere Sicherheit vor einer Überlastung des elektrischen Versorgungsnetzes zu ermöglichen kann das Verfahren ferner die folgenden Schritte umfassen: Prüfen, ob eine Kommunikationsverbindung zwischen der Haussteuerung und dem Energieerzeuger existiert und Unterbinden, bei Feststellen eines Ausfalls der Kommunikationsverbindung zwischen der Haussteuerung und dem Energieerzeuger, einer Einspeisung von von dem Energieerzeuger erzeugter elektrischer Leistung in das Hausnetz. Das Prüfen kann dabei in zeitlich verschiedenen, in regelmäßigen oder in periodischen Abständen erfolgen. Auch ein Ausfall der Kommunikationsverbindung zwischen der Haussteuerung und dem Energieerzeuger kann zu Problemen für das elektrische Versorgungsnetz führen. Gemäß dieser Ausführungsform erkennt die Haussteuerung, dass die Kommunikationsverbindung zwischen der Haussteuerung und dem Energieerzeuger ausgefallen ist.

Bei der Kommunikationsverbindung zwischen der Haussteuerung und dem Energieerzeuger kann es sich um eine PLC-Kommunikationsverbindung über das Hausnetz handeln. Bei der Kommunikationsverbindung zwischen der Haussteuerung und dem Energieerzeuger kann es sich auch um eine drahtlose Kommunikationsverbindung, wie beispielsweise eine Mobilfunk- oder WLAN-Verbindung, oder eine separate drahtgebundene Kommunikationsverbindung, wie beispielsweise eine Ethernet-Verbindung, handeln. Erkennt die Haussteuerung einen Ausfall dieser Kommunikationsverbindung, so kann sie eine elektrische Verbindung des Energieerzeugers mit dem Hausnetz und/oder dem elektrischen Versorgungsnetz öffnen. Das Prüfen des Ausfalls der Kommunikationsverbindung zwischen der Haussteuerung und dem Energieerzeuger kann mit Hilfe von Testdatenpaketen erfolgen, die von der Haussteuerung an den Energieerzeuger gesendet werden und deren Empfang von dem Energieerzeuger zu bestätigen ist. Ist die Kommunikationsverbindung zwischen der Haussteuerung und dem Energieerzeuger nach dem Ausfall wiederaufgebaut, so kann die von dem Energieerzeuger erzeugte elektrische Leistung wieder in das Hausnetz bzw. das elektrische Versorgungsnetz einspeist werden.

Folglich ergibt sich gemäß der vorstehend beschriebenen Ausführungsform eine dreischichtige Sicherung vor einer Überlast in dem elektrischen Versorgungsnetz, d.h., eine erste Sicherung mit Hilfe der Steuerung der Leistungsabgabe eines Hauses in das elektrische Versorgungsnetz durch die Steuerungsvorrichtung, eine zweite Sicherung durch die Überprüfung der Kommunikationsverbindung zwischen der Steuerungsvorrichtung und der Haussteuerung, und eine dritte Sicherung durch die Überprüfung der Kommunikationsverbindung zwischen der Haussteuerung und dem Energieerzeuger. Die zweite Sicherung und die dritte Sicherung können auch alternativ erfolgen.

Die eingangs gestellte Aufgabe wird auch durch ein Verfahren zum Steuern einer Leistungsabgabe eines Energieerzeugers in ein elektrisches Hausnetz eines Hauses gelöst, wobei der Energieerzeuger über das Hausnetz mit einer Haussteuerung verbunden ist, und das Verfahren die Folgenden durch den Energieerzeuger ausgeführten Verfahrensschritte umfasst: Empfangen, über eine Kommunikationsverbindung zwischen der Haussteuerung und dem Energieerzeuger eines Steuerungsbefehls der Haussteuerung, Prüfen, ob die Kommunikationsverbindung zwischen der Haussteuerung und dem Energieerzeuger existiert und Unterbinden, bei Feststellen eines Ausfalls der Kommunikationsverbindung zwischen der Haussteuerung und dem Energieerzeuger einer Einspeisung von elektrischer Leistung von dem Energieerzeuger in das Hausnetz. Das Prüfen kann dabei in zeitlich verschiedenen, in regelmäßigen oder in periodischen Abständen erfolgen.

Gemäß dieser Ausführungsform liegt die Intelligenz beim Energieerzeuger, d.h., der Energieerzeuger prüft, ob die Kommunikationsverbindung zwischen der Haussteuerung und dem Energieerzeuger existiert und Unterbindet, bei Feststellen eines Ausfalls der Kommunikationsverbindung zwischen der Haussteuerung und dem Energieerzeuger einer Einspeisung von elektrischer Leistung von dem Energieerzeuger in das Hausnetz. Es ist auch denkbar, dass der Energieerzeuger eine Einspeisung von elektrischer Leistung von dem Energieerzeuger in das elektrische Versorgungsnetz unterbindet, beispielsweise durch Öffnen einer elektrischen Verbindung. Ist der Energieerzeuger beispielsweise als eine Photovoltaikanlage ausgebildet, so kann die Steuerung durch den Wechselrichter der Photovoltaikanlage oder einen den Wechselrichter steuernden Microcontroller erfolgen.

Die eingangs gestellte Aufgabe wird ferner durch ein Verfahren zum Steuern einer Leistungsabgabe einer Vielzahl von Häusern, die jeweils einen Energieerzeuger und einer Haussteuerung umfassen, in ein elektrisches Versorgungsnetz gelöst, wobei das Verfahren die Folgenden durch eine Steuerungsvorrichtung in einer Zentraleinheit, die mit dem elektrischen Versorgungsnetz verbunden ist, ausgeführten Verfahrensschritte umfasst: Prüfen, ob Kommunikationsverbindungen zwischen der Steuerungsvorrichtung und den jeweiligen Haussteuerungen der Vielzahl von Häusern existieren, Bestimmen der Anzahl von Häusern, bei denen keine Kommunikationsverbindung zwischen der Steuerungsvorrichtung und deren Haussteuerung existiert, und Steuern der Leistungsabgabe von Häusern der Vielzahl von Häusern, mit denen eine Kommunikationsverbindung existiert, in Abhängigkeit von der bestimmten Anzahl von Häusern, mit denen keine Kommunikationsverbindung existiert. Das Prüfen kann dabei in zeitlich verschiedenen, in regelmäßigen oder in periodischen Abständen erfolgen.

Bei dieser Ausführungsform wird davon ausgegangen werden, dass bei Ausfall einer Kommunikationsverbindung zwischen der Steuerungsvorrichtung und einer Haussteuerung das Haus, in dem sich die Haussteuerung befindet, nur bis zu einem vorgegebenen Schwellenwert elektrische Leistung in das elektrische Versorgungsnetz einspeist. Dazu kann dieses Verfahren auch mit einem der vorstehend beschriebenen Verfahren kombiniert werden. Folglich wird gemäß dieser Ausführungsform neben dem Schutz des elektrischen Versorgungsnetzes vor einer Überlastsituation ermöglicht, dass die Einspeisung von elektrischer Leistung in das elektrische Versorgungsnetz an die Anzahl von einspeisenden Häusern angepasst wird. Dies hat den Vorteil, dass eine individuelle und dynamische Anpassung der Einspeisung von elektrischer Leistung durch die Häuser in das elektrische Versorgungsnetz ermöglicht wird.

Um eine weitere Sicherung vor einer Überlastung des elektrischen Versorgungsnetzes vorzusehen kann das Verfahren ferner den Schritt Steuern der Leistungsabgabe der Häuser, mit denen eine Kommunikationsverbindung existiert, unter Berücksichtigung eines Leistungssicherheitswerts umfassen. Dadurch kann ein möglicher weiterer Ausfall einer Kommunikationsverbindung zwischen der Steuerungsvorrichtung und einer Haussteuerung, oder eine Wiederaufnahme einer Kommunikationsverbindung berücksichtigt werden.

Um das elektrische Versorgungsnetz lastoptimiert zu steuern kann bei Ausfall der Kommunikationsverbindung zwischen der Steuerungsvorrichtung und einer der jeweiligen Haussteuerungen der Vielzahl von Häusern die Leistungsabgabe mindestens eines der Häuser, mit denen eine Kommunikationsverbindung existiert, erhöht werden.

Das Verfahren kann ferner den Schritt Steuern der Leistungsabgabe von Häusern der Vielzahl von Häusern, mit denen eine Kommunikationsverbindung existiert, in Abhängigkeit von einer Kommunikationsausfallhistorie der Häuser der Vielzahl von Häusern, mit denen eine Kommunikationsverbindung existiert, umfassen. So kann in der Steuerungsvorrichtung Information gespeichert sein, welche Kommunikationsverbindungen in der Vergangenheit bereits einmal oder öfters ausgefallen sind. Diese Information gibt der Steuerungsvorrichtung Hinweise, welche Kommunikationsverbindungen möglicherweise wieder ausfallen. In Abhängigkeit von der Anzahl von Kommunikationsverbindungen mit einer hohen Ausfallwahrscheinlichkeit können die Leistungsabgaben der Häuser, mit denen eine Kommunikationsverbindung existiert, unter Berücksichtigung eines Leistungssicherheitswerts gesteuert werden.

Um einen weiteren Schutz vor einem Ausfall der Kommunikationsverbindung zwischen der Steuerungsvorrichtung und einer der jeweiligen Haussteuerungen zu ermöglichen kann das Verfahren ferner den Schritt Senden, über eine Vielzahl von Signalwiederholern, von Steuerungssignalen an die jeweiligen Haussteuerungen der Vielzahl von Häusern umfassen. Die Vielzahl von Signalwiederholern kann insbesondere redundante Signalwiederholer umfassen. Die Signalwiederholer können beispielsweise in einer PLC-Kommunikationsverbindung des elektrischen Versorgungsnetzes integriert sein und die Leistung der Sendesignale erhöhen und/oder erneut senden. Signalwiederholer, insbesondere redundante Signalwiederholer, können ebenfalls in der Kommunikationsverbindung zwischen der Haussteuerung und dem Energieerzeuger integriert sein.

Die vorliegende Offenbarung betrifft ferner eine Haussteuerung für ein Haus, die dazu eingerichtet ist, eines der vorstehend beschriebenen Verfahren auszuführen.

Des Weiteren betrifft die vorliegende Offenbarung einen elektrischen Energieerzeuger in einem Haus, der dazu eingerichtet ist, eines der vorstehend beschriebenen Verfahren auszuführen.

Die vorliegende Offenbarung betrifft auch eine Steuerungsvorrichtung in einer Zentraleinheit, die dazu eingerichtet ist, eines der vorstehend beschriebenen Verfahren auszuführen.

Ferner betrifft die vorliegende Offenbarung ein Hausnetz in einem Haus, das die vorstehende beschriebene Haussteuerung und den vorstehend beschriebenen elektrischen Energieerzeuger umfasst.

Schließlich betrifft die vorliegende Offenbarung ein elektrisches Versorgungsnetz, das die vorstehende beschriebene Haussteuerung und die vorstehend beschriebene Steuerungsvorrichtung umfasst.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren Vorrichtungen, Systeme und Netze ergeben sich aus der nachfolgenden Beschreibung von Ausführungsbeispielen und der Figuren.
- Fig. 1: zeigt eine schematische Darstellung eines Ausführungsbeispiels eines elektrischen Versorgungsnetzes mit einer Zentraleinheit und einer Vielzahl von Häusern;
- Fig. 2: zeigt ein Flussdiagramm eines Ausführungsbeispiels eines Verfahrens zum Steuern einer Leistungsabgabe eines Hauses in ein elektrisches Versorgungsnetz durch eine Haussteuerung;
- Fig. 3: zeigt ein Flussdiagramm eines Ausführungsbeispiels eines Verfahrens zum Steuern einer Leistungsabgabe eines Energieerzeugers in ein elektrisches Hausnetz eines Hauses durch den Energieerzeuger; und
- Fig. 4: zeigt ein Flussdiagramm eines Ausführungsbeispiels eines Verfahrens zum Steuern einer Leistungsabgabe einer Vielzahl von Häusern in ein elektrisches Versorgungsnetz durch eine Steuerungsvorrichtung einer Zentraleinheit.

### DETAILLIERTE BESCHREIBUNG

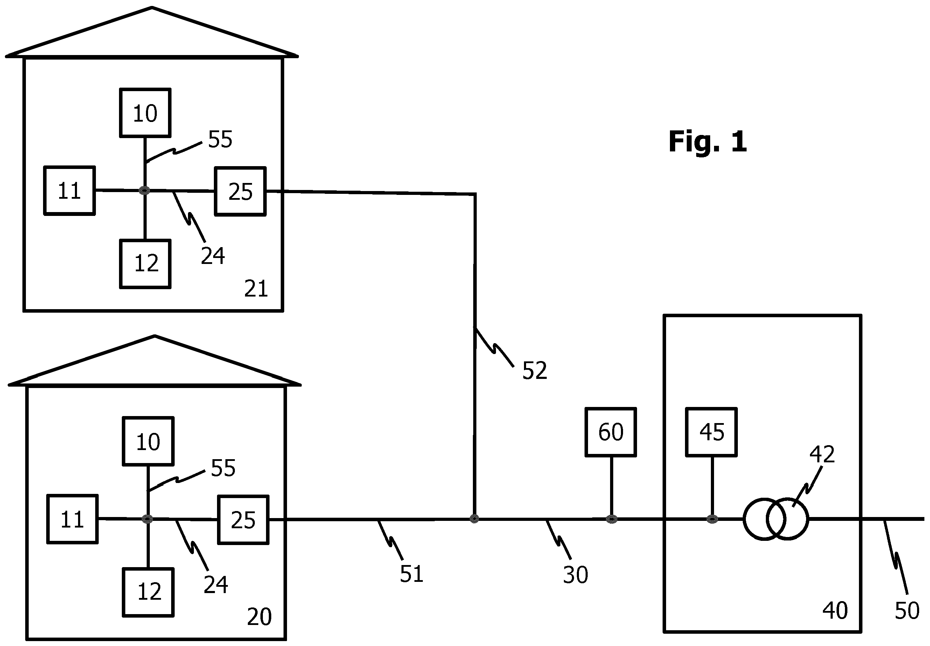

Die Fig. 1 zeigt eine schematische Darstellung eines Ausführungsbeispiels eines elektrischen Versorgungsnetzes 30 mit einer Zentraleinheit 40 und einer Vielzahl von Häusern, von denen zwei Häuser 20 und 21 exemplarisch gezeigt sind.

Bei dem elektrische Versorgungsnetz 30 handelt es sich um ein Niederspannungsnetz, das von einem Mittelspannetz 50 gespeist wird. Zur Transformation zwischen den Netzen 50 und 30 ist in der Zentraleinheit ein Transformator 42 vorgesehen. Durch den Transformator 42 wird die Mittelspannung des Mittelspannungsnetzes 50 in eine Niederspannung transformiert, die von einem Verteiler in eine Vielzahl von Verteilungssträngen des elektrischen Versorgungsnetzes 30 verteilt wird (in Fig. 1 nicht gezeigt). Beispielsweise können an den Verteiler über 100 Verteilungsstränge angeschlossen sein.

Die Zentraleinheit 40 umfasst ferner eine Steuerungsvorrichtung 45. Mit Hilfe der Steuerungsvorrichtung 45 kann die Zentraleinheit 40 elektrische Lasten und Energieerzeuger in den Häusern 20 und 21 ab- bzw. anschalten. Bei der Steuerungsvorrichtung 45 kann es sich insbesondere um eine G100-kompatible Unterstationssteuerung handeln, siehe Energy Networks Association, Engineering Recommendation G100, Issue 1 Amendment 2 2018, Technical Requirements for Customer Export Limiting Schemes. Weitere, in der Fig. 1 nicht gezeigte Elemente, wie beispielsweise eine Leistungsmessvorrichtung, eine Kommunikationsvorrichtung, usw., können in der Zentraleinheit 40 vorgesehen sein.

Jedes der Häuser 20 und 21 umfasst eine Haussteuerung 25 und ein Hausnetz 24, an das eine Photovoltaikanlage 10, ein elektrischer Energiespeicher 11 und eine Ladestation für ein Elektrofahrzeug 12 angeschlossen sind. Weitere, in der Figur 1 nicht gezeigte, elektrische Lasten und elektrische Energieerzeuger, sowie ein Strommessgerät (z.B. ein Smart Meter) können in jedem der Häuser 20 und 21 an das Hausnetz 24 angeschlossen sein. Beispielsweise können die Häuser 20 und 21 zusätzlich eine Batterie und eine Wärmepumpe umfassen.

Über das elektrische Versorgungsnetz 30 ist die Steuerungsvorrichtung 45 mit den Steuerungen 25 bzw. den Hausnetzen 24 der Häuser 20 und 21 verbunden. So kann die Haussteuerung 25 gerätespezifische Leistungsbefehle und/oder die Leistungsabgabe des gesamten Hauses 20 bzw. 21 betreffende Befehle von der Steuerungsvorrichtung 45 empfangen. Des Weiteren besteht eine PLC-Kommunikationsverbindung 51 zwischen der Steuerungsvorrichtung 45 und der Haussteuerung 25 in dem Haus 20 und eine PLC-Kommunikationsverbindung 52 zwischen der Steuerungsvorrichtung 45 und der Haussteuerung 25 in dem Haus 21. jeweilige PLC-Kommunikationsverbindungen 55 zwischen der Haussteuerung 25 und der Photovoltaikanlage 10 sind in jedem der Häuser 20 und 21 vorgesehen. Für die Kommunikationsverbindungen 51, 52 und 55 notwendige PLC-Modems und Koppelkapazitäten sind ferner in der Zentraleinheit 40 und den Häusern 20 und 21 vorgesehen (in Fig. 1 nicht gezeigt).

Zur Vermeidung von Über- bzw. Unterlastsituationen in dem elektrischen Versorgungsnetz 30 steuert die Steuerungsvorrichtung 45 in jedem der Häuser 20 und 21 die Photovoltaikanlage 10, den elektrischen Energiespeicher 11 und die Ladestation für das Elektrofahrzeug 12. Dazu schickt die Steuerungsvorrichtung 45 über die Kommunikationsverbindung 51 Steuerungsbefehle an die Haussteuerung 25 in dem Haus 20 und über die Kommunikationsverbindung 52 Steuerungsbefehle an die Haussteuerung 25 in dem Haus 21. In Abhängigkeit von den empfangenen Steuerungsbefehlen steuert die Haussteuerung 25 in dem Haus 20 die Photovoltaikanlage 10, den elektrischen Energiespeicher 11 und die Ladestation für das Elektrofahrzeug 12 in dem Haus 20. In Abhängigkeit von den empfangenen Steuerungsbefehlen steuert auch die Haussteuerung 25 in dem Haus 21 die Photovoltaikanlage 10, den elektrischen Energiespeicher 11 und die Ladestation für das Elektrofahrzeug 12 in dem Haus 21.

Zum Schutz vor Kommunikationsfehlern bei der Kommunikation über die Kommunikationsverbindungen 51 und 52 sind in dem elektrischen Versorgungsnetz 30 eine Vielzahl von Signalwiederholern 60 vorgesehen, die wiederholt Steuerungssignale von der Steuerungsvorrichtung 45 an die jeweiligen Haussteuerungen 25 der Häuser 20 und 21 senden. Es kann auch eine kontinuierliche Signalisierung vorgesehen sein, bei der beispielsweise jede Sekunde ein neuer Befehl von der Steuerungsvorrichtung 45 an die Haussteuerung 25 gesendet wird. Wenn der vorherige Befehl nicht empfangen wurde, erzeugt die Steuerungsvorrichtung 45 einen neuen Befehl. Wenn eine vorgegebene Zeit keine Rückmeldung von der Haussteuerung 25 empfangen wurde, kann die Steuerungsvorrichtung 45 eine interne Liste der verfügbaren Häuser 20 bzw. 21 aktualisieren und eine den Befehl erzeugende Logik ändern, um nicht antwortende Häuser 20 bzw. 21 zu berücksichtigen. Dabei bestimmt die Haussteuerung 25, ob sie Befehle von der Steuerungsvorrichtung 45 empfängt, und geht in Abhängigkeit davon in einen ausfallsicheren Modus und/oder schränkt die Leistungsabgabe bzw. den Leistungsverbrauch der Häuser 20 und 21 ein.

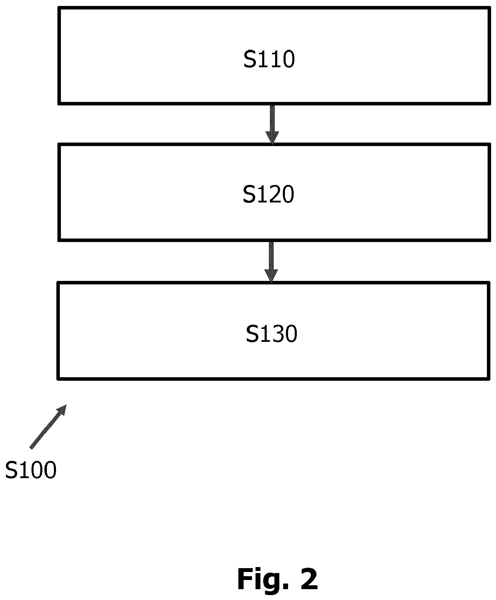

Die Fig. 2 zeigt ein Flussdiagramm eines Ausführungsbeispiels eines Verfahrens S100 zum Steuern einer Leistungsabgabe eines Hauses in ein elektrisches Versorgungsnetz durch eine Haussteuerung. Dieses Verfahren kann von einer der in der Fig. 1 gezeigten Haussteuerungen 25 ausgeführt werden und wird nachfolgend unter Bezugnahme auf die Fig. 1 beschrieben. Es sei aber darauf hingewiesen, dass das Verfahren der Fig. 2 nicht auf das Ausführungsbeispiel der Fig. 1 beschränkt ist.

In einem ersten Schritt S110 empfängt die Haussteuerung 25 in dem Haus 20 über die Kommunikationsverbindung 51 zwischen der Steuerungsvorrichtung 45 und der Haussteuerung 25 des Hauses 20 einen Steuerungsbefehl der Steuerungsvorrichtung 45. In einem zweiten Schritt S120 steuert die Haussteuerung 25 in dem Haus 20 die Photovoltaikanlage 10 in Abhängigkeit von dem Steuerungsbefehl. In einem dritten Schritt S130 stellt die Haussteuerung 25 in dem Haus 20 sicher, dass das Haus 20, bei Ausfall der Kommunikationsverbindung 51 zwischen der Steuerungsvorrichtung 45 und der Haussteuerung 25 in dem Haus 20, nur bis zu einem vorgegebenen Schwellenwert in dem Haus 20 erzeugte elektrische Leistung in das elektrische Versorgungsnetz 30 einspeist. Dazu kann die Haussteuerung 25 die Photovoltaikanlage 10 von dem Hausnetz 24 abkoppeln.

Das vorstehend beschriebene Verfahren kann ferner die durch die Haussteuerung 25 in dem Haus 20 ausgeführten Verfahrensschritte Prüfen, ob die Kommunikationsverbindung 51 zwischen der Steuerungsvorrichtung 45 und der Haussteuerung 25 existiert, und Unterbinden, bei Feststellen eines Ausfalls der Kommunikationsverbindung 51 zwischen der Steuerungsvorrichtung 45 und der Haussteuerung 25, der Einspeisung von in dem Haus 20 erzeugter elektrischer Leistung in das elektrische Versorgungsnetz 30, umfassen.

Bei Feststellen eines Ausfalls der Kommunikationsverbindung 51 zwischen der Steuerungsvorrichtung 45 und der Haussteuerung 25, kann die Haussteuerung 25 in dem Haus 20 auch die von der Photovoltaikanlage 10 erzeugte elektrische Leistung dem an das Hausnetz 24 angeschlossenen Energiespeicher 11 oder der Ladestation 12 in dem Haus 20 zuführen.

Die Haussteuerung 25 in dem Haus 20 kann auch die Kommunikationsverbindung 55 zwischen der Haussteuerung 25 und der Photovoltaikanlage 10 überprüfen. Dazu prüft die Haussteuerung 25 ob die Kommunikationsverbindung 55 zwischen der Haussteuerung 25 und der Photovoltaikanlage 10 existiert und unterbindet, bei Feststellen eines Ausfalls der Kommunikationsverbindung 55 zwischen der Haussteuerung 25 und der Photovoltaikanlage 10, eine Einspeisung der von der Photovoltaikanlage 10 erzeugten elektrischen Leistung in das Hausnetz 24.

Somit kann die Haussteuerung 25 in dem Haus 20 einen zweifachen Schutz vor einer Netzüberlastung bereitstellen. Die Haussteuerung 25 in dem Haus 21 kann entsprechende Verfahren ausführen.

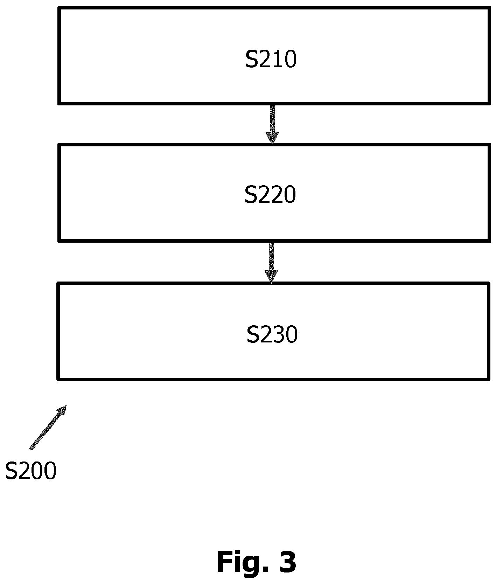

Die Fig. 3 zeigt ein Flussdiagramm eines Ausführungsbeispiels eines Verfahrens S200 zum Steuern einer Leistungsabgabe eines Energieerzeugers in ein elektrisches Hausnetz eines Hauses durch den Energieerzeuger. Dieses Verfahren kann von einer der in der Fig. 1 gezeigten Photovoltaikanlagen 10 ausgeführt werden und wird nachfolgend unter Bezugnahme auf die Fig. 1 beschrieben. Es sei aber darauf hingewiesen, dass das Verfahren der Fig. 3 nicht auf das Ausführungsbeispiel der Fig. 1 beschränkt ist. Ferner kann das Verfahren der Fig. 3 direkt im Anschluss oder direkt vor dem Verfahren der Fig. 2 bzw. den vorstehend beschriebenen Verfahren ausgeführt werden.

In einem ersten Schritt S210 empfängt die Photovoltaikanlage 10 in dem Haus 20 über die Kommunikationsverbindung 55 zwischen der Haussteuerung 25 und der Photovoltaikanlage 10 einen Steuerungsbefehl der Haussteuerung 25 in dem Haus 20. In einem zweiten Schritt S220 prüft die Photovoltaikanlage 10 in dem Haus 20 ob die Kommunikationsverbindung 55 zwischen der Haussteuerung 25 und der Photovoltaikanlage 10 existiert. Bei Feststellung eines Ausfalls der Kommunikationsverbindung 55 zwischen der Haussteuerung 25 und der Photovoltaikanlage 10 unterbindet die Photovoltaikanlage 10 in einem Schritt S230 eine Einspeisung von elektrischer Leistung in das Hausnetz 24, beispielsweise indem sie sich vom Hausnetz 24 abkoppelt. Die Photovoltaikanlage 10 in dem Haus 21 kann ein entsprechendes Verfahren ausführen.

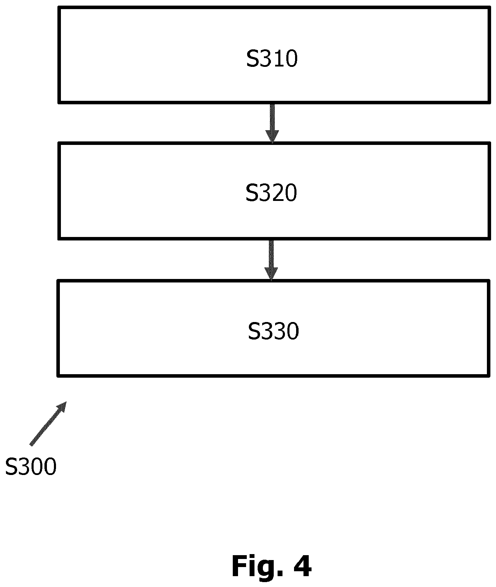

Die Fig. 4 zeigt ein Flussdiagramm eines Ausführungsbeispiels eines Verfahrens S300 zum Steuern einer Leistungsabgabe einer Vielzahl von Häusern in ein elektrisches Versorgungsnetz durch eine Steuerungsvorrichtung einer Zentraleinheit. Dieses Verfahren kann von der in der Fig. 1 gezeigten Steuerungsvorrichtung 45 ausgeführt werden und wird nachfolgend unter Bezugnahme auf die Fig. 1 beschrieben. Es sei aber darauf hingewiesen, dass das Verfahren der Fig. 4 nicht auf das Ausführungsbeispiel der Fig. 1 beschränkt ist. Ferner kann das Verfahren der Fig. 4 direkt im Anschluss oder direkt vor dem Verfahren der Fig. 2, oder direkt im Anschluss oder direkt vor dem Verfahren der Fig. 3 ausgeführt werden.

In einem ersten Schritt S310 prüft die Steuerungsvorrichtung 45 ob die Kommunikationsverbindungen 51 und 52 zwischen der Steuerungsvorrichtung 45 und den jeweiligen Haussteuerungen 25 der Häuser 20 und 21 existieren. In einem zweiten Schritt S320 bestimmt die Steuerungsvorrichtung 45 die Anzahl von Häusern, bei denen keine Kommunikationsverbindung zwischen der Steuerungsvorrichtung 45 und deren Haussteuerung 25 existiert. In einem dritten Schritt S330 steuert die Steuerungsvorrichtung 45 die Leistungsabgabe von Häusern der Vielzahl von Häusern, mit denen eine Kommunikationsverbindung existiert, in Abhängigkeit von der bestimmten Anzahl von Häusern, mit denen keine Kommunikationsverbindung existiert.

Beispielsweise erhöht die Steuerungsvorrichtung 45, bei Ausfall der Kommunikationsverbindung 51 zwischen der Steuerungsvorrichtung 45 und der Haussteuerung 25 des Hauses 20 die Leistungsabgabe des Hauses 21, mit dem die Kommunikationsverbindung 52 existiert.

Die Steuerungsvorrichtung 45 kann auch die Leistungsabgabe der Häuser, mit denen eine Kommunikationsverbindung existiert, unter Berücksichtigung eines Leistungssicherheitswerts steuern. Ferner kann die Steuerungsvorrichtung 45 die Leistungsabgabe von Häusern, mit denen eine Kommunikationsverbindung existiert, in Abhängigkeit von einer Kommunikationsausfallhistorie der Häuser, mit denen eine Kommunikationsverbindung existiert, steuern. Schließlich kann die Steuerungsvorrichtung 45 Steuerungssignale wiederholt über eine Vielzahl von Signalwiederholern 60 an die jeweiligen Haussteuerungen 25 der Häuser 20 und 21 senden. Durch Verfahrensschritte kann ein zusätzlicher Schutz vor einer Überlastung des elektrischen Versorgungsnetzes 30 bereitgestellt werden.

Bei Ausfall der Kommunikationsverbindung 51 zwischen der Haussteuerung 25 des Hauses 20 und der Steuerungsvorrichtung 45 kann die Haussteuerung 25 des Hauses 20 die Steuerung der Leistungsabgabe des Hauses 20 unabhängig von der Steuerungsvorrichtung 45 ausführen. Ferner kann bei Ausfall einer der Kommunikationsverbindungen 55 zwischen der Haussteuerung 25 und der Photovoltaikanlage 10, dem elektrischen Energiespeicher 11 oder der Ladestation für ein Elektrofahrzeug 12 die betroffene Einheit 10, 11 oder 12 in eine Standardeinstellung zu Abgabe bzw. Aufnahme elektrischer Leistung wechseln, die für das elektrische Versorgungsnetz 30 zu keinen Stabilitätsproblemen führen kann.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Verfahren zum Steuern einer Leistungsabgabe eines Hauses (20, 21) in ein elektrisches Versorgungsnetz (30), wobei eine Haussteuerung (25) in dem Haus (20, 21) über ein Hausnetz (24) mit einem Energieerzeuger (10) in dem Haus (20, 21) und über das elektrische Versorgungsnetz (30) mit einer Steuerungsvorrichtung (45) in einer Zentraleinheit (40) verbunden ist, und das Verfahren die Folgenden durch die Haussteuerung (25) ausgeführten Verfahrensschritte umfasst:
Empfangen (S110), über eine Kommunikationsverbindung (51, 52) zwischen der Steuerungsvorrichtung (45) und der Haussteuerung (25), eines Steuerungsbefehls der Steuerungsvorrichtung (45), und
Steuern (S120) des Energieerzeugers (10) in Abhängigkeit von dem Steuerungsbefehl, wobei
das Haus (20, 21), bei Ausfall der Kommunikationsverbindung (51, 52) zwischen der Steuerungsvorrichtung (45) und der Haussteuerung (25), nur bis zu einem vorgegebenen Schwellenwert in dem Haus (20, 21) erzeugte elektrische Leistung in das elektrische Versorgungsnetz (30) einspeist (S130).

2. Verfahren nach Anspruch 1, ferner umfassend
Prüfen, ob die Kommunikationsverbindung (51, 52) zwischen der Steuerungsvorrichtung (45) und der Haussteuerung (25) existiert und
Begrenzen, bei Feststellen eines Ausfalls der Kommunikationsverbindung (51, 52) zwischen der Steuerungsvorrichtung (45) und der Haussteuerung (25), der Einspeisung von in dem Haus (20, 21) erzeugter elektrischer Leistung in das elektrische Versorgungsnetz (30).

3. Verfahren nach einem der vorhergehenden Ansprüche, ferner umfassend
Zuführen, bei Feststellen eines Ausfalls der Kommunikationsverbindung (51, 52) zwischen der Steuerungsvorrichtung (45) und der Haussteuerung (25), der von dem Energieerzeuger (10) erzeugten elektrischen Leistung einem an das Hausnetz (24) angeschlossenen Energiespeicher (11) oder Verbraucher (12).

4. Verfahren nach einem der vorhergehenden Ansprüche, ferner umfassend
Prüfen, ob eine Kommunikationsverbindung (55) zwischen der Haussteuerung (25) und dem Energieerzeuger (10) existiert und
Unterbinden, bei Feststellen eines Ausfalls der Kommunikationsverbindung (55) zwischen der Haussteuerung (25) und dem Energieerzeuger (10), einer Einspeisung von von dem Energieerzeuger (10) erzeugter elektrischer Leistung in das Hausnetz (24).

5. Verfahren zum Steuern einer Leistungsabgabe eines Energieerzeugers (10) in ein elektrisches Hausnetz (24) eines Hauses (20, 21), wobei der Energieerzeuger (10) über das Hausnetz (24) mit einer Haussteuerung (25) verbunden ist, und das Verfahren die Folgenden durch den Energieerzeuger (10) ausgeführten Verfahrensschritte umfasst:
Empfangen (S210), über eine Kommunikationsverbindung (55) zwischen der Haussteuerung (25) und dem Energieerzeuger (10) eines Steuerungsbefehls der Haussteuerung (25),
Prüfen (S220), ob die Kommunikationsverbindung (55) zwischen der Haussteuerung (25) und dem Energieerzeuger (10) existiert und
Unterbinden (S230), bei Feststellen eines Ausfalls der Kommunikationsverbindung (55) zwischen der Haussteuerung (25) und dem Energieerzeuger (10) einer Einspeisung von elektrischer Leistung von dem Energieerzeuger (25) in das Hausnetz (24).

6. Verfahren zum Steuern einer Leistungsabgabe einer Vielzahl von Häusern (20, 21), die jeweils einen Energieerzeuger (10) und einer Haussteuerung (25) umfassen, in ein elektrisches Versorgungsnetz (30), wobei das Verfahren die Folgenden durch eine Steuerungsvorrichtung (45) in einer Zentraleinheit (40), die mit dem elektrischen Versorgungsnetz (30) verbunden ist, ausgeführten Verfahrensschritte umfasst:
Prüfen (S310), ob Kommunikationsverbindungen (51, 52) zwischen der Steuerungsvorrichtung (45) und den jeweiligen Haussteuerungen (25) der Vielzahl von Häusern (20, 21) existieren,
Bestimmen (S320) der Anzahl von Häusern (20, 21), bei denen keine Kommunikationsverbindung (51, 52) zwischen der Steuerungsvorrichtung (45) und deren Haussteuerung (25) existiert und
Steuern (S330) der Leistungsabgabe von Häusern der Vielzahl von Häusern (20, 21), mit denen eine Kommunikationsverbindung (51, 52) existiert, in Abhängigkeit von der bestimmten Anzahl von Häusern, mit denen keine Kommunikationsverbindung (51, 52) existiert.

7. Verfahren nach Anspruch 6, ferner umfassend
Steuern der Leistungsabgabe der Häuser (20, 21), mit denen eine Kommunikationsverbindung (51, 52) existiert, unter Berücksichtigung eines Leistu ngssicherheitswerts.

8. Verfahren nach Anspruch 6 oder 7, ferner umfassend
Erhöhen, bei Ausfall der Kommunikationsverbindung (51, 52) zwischen der Steuerungsvorrichtung (45) und einer der jeweiligen Haussteuerungen (25) der Vielzahl von Häusern (20, 21), der Leistungsabgabe mindestens eines der Häuser, mit denen eine Kommunikationsverbindung (51, 52) existiert.

9. Verfahren nach einem der Ansprüche 6 bis 8, ferner umfassend
Steuern der Leistungsabgabe von Häusern der Vielzahl von Häusern (20, 21), mit denen eine Kommunikationsverbindung (51, 52) existiert, in Abhängigkeit von einer Kommunikationsausfallhistorie der Häuser der Vielzahl von Häusern (20, 21), mit denen eine Kommunikationsverbindung existiert (51, 52).

10. Verfahren nach einem der Ansprüche 6 bis 9, ferner umfassend
Senden, über eine Vielzahl von Signalwiederholern (60), von Steuerungssignalen an die jeweiligen Haussteuerungen (25) der Vielzahl von Häusern (20, 21).

11. Haussteuerung (25) für ein Haus (20, 21), die dazu eingerichtet ist, das Verfahren nach einem der Ansprüche 1 bis 4 auszuführen.

12. Elektrischer Energieerzeuger (10) in einem Haus (20, 21), der dazu eingerichtet ist, das Verfahren nach Anspruch 5 auszuführen.

13. Steuerungsvorrichtung (45) in einer Zentraleinheit (40), die dazu eingerichtet ist, das Verfahren nach einem der Ansprüche 6 bis 10 auszuführen.

14. Hausnetz (24) in einem Haus, umfassend die Haussteuerung (25) nach Anspruch 11 und den elektrischen Energieerzeuger nach Anspruch 12.

15. Elektrisches Versorgungsnetz (30), umfassend die Haussteuerung (25) nach Anspruch 11 und die Steuerungsvorrichtung (45) nach Anspruch 13.
